(19) Europäisches Patentamt
European Patent Office
Office européen des brevets

(11) **EP 4 263 103 B1**

(12) **EUROPÄISCHE PATENTSCHRIFT**

(45) Veröffentlichungstag und Bekanntmachung des Hinweises auf die Patenterteilung:
**07.01.2026   Patentblatt 2026/02**

(21) Anmeldenummer: **21867868.8**

(22) Anmeldetag: **16.12.2021**

(51) Internationale Patentklassifikation (IPC):
**B23K 1/20** (2006.01)        **B23K 3/04** (2006.01)
**B23K 101/36** (2006.01)

(52) Gemeinsame Patentklassifikation (CPC):
**B23K 1/20; B23K 3/043;** B23K 2101/36

(86) Internationale Anmeldenummer:
**PCT/DE2021/000206**

(87) Internationale Veröffentlichungsnummer:
**WO 2022/127961 (23.06.2022 Gazette 2022/25)**

(54) **VERFAHREN UND VORRICHTUNG ZUM REDUZIEREN VON OBERFLÄCHEN**

METHOD AND DEVICE FOR REDUCING SURFACES

PROCÉDÉ ET DISPOSITIF POUR RÉDUIRE DES SURFACES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2020   DE 102020007704**

(43) Veröffentlichungstag der Anmeldung:
**25.10.2023   Patentblatt 2023/43**

(73) Patentinhaber: **Amsel-Advanced Materials and Surfaces for Environment and Life GmbH
52070 Aachen (DE)**

(72) Erfinder: **ASAD, Syed Salman
3500 Hasselt (BE)**

(74) Vertreter: **Castell, Klaus
Patentanwaltskanzlei Liermann-Castell
Oberstraße 135
52349 Düren (DE)**

(56) Entgegenhaltungen:
DD-A1- 258 683       DD-A1- 278 006
DE-A1- 2 511 210     DE-A1- 4 117 341
DE-C2- 4 041 272     DE-T5- 112014 004 452
US-A- 5 358 169

**Beschreibung**

Die Erfindung betrifft ein Verfahren und eine Vorrichtung zum Reduzieren von Oberflächen, siehe Ansprüche 1 und 11.

Die Reinigung und Reduktion von oxidierten Oberflächen zur Freilegung eines Metalls ist insbesondere für industrielle Anwendungen von größter Bedeutung. Eine saubere Metalloberfläche ist beispielsweise für die Nachbearbeitung wie eine Schichtabscheidung, ein Filmwachstum, Schweißen, Hart- und Weichlöten notwendig. Klassischerweise wird der Reduktionsprozess unter Verwendung von aggressiven Chemikalien, Atmosphären- oder Niederdruckplasmen, abgeschirmten oder Niederdrucksystemen unter Verwendung von Wasserstoffionen oder anderen neutralen Spezies durchgeführt.

Die DE 41 17 341 A1 (offenbarend den Oberbegriff des Anspruchs 1) zeigt ein Verfahren und eine Vorrichtung zum Freilegen oxydierter, beschichteter und verschmutzter Metalloberflächen, bei dem ein Stahlblech relativ zu einem Wasserstoffoxidationsbrenner bewegt wird. Der Wasserstoffoxidationsbrenner wird mit einem Wasserstoff-Sauerstoff-Gemisch mit einem molaren Wasserstoffüberschuss gespeist. Auf der Seite des Wasserstoffoxidationsbrenners wird mit einem Röhrchen, wo das Stahlblech durch die Flamme bereits freigelegt ist, nochmals Wasserstoff zugeführt, die die Abkühlung der freigelegten Bereiche mit Sicherheit unter reduzierenden Bedingungen bewirkt.

Der Erfindung liegt die Aufgabe zu Grunde, ein derartiges Verfahren weiterzuentwickeln und eine Vorrichtung vorzuschlagen, die sich für ein derartiges Verfahren sehr gut eignet.

Diese Aufgabe wird mit einem Verfahren mit den Merkmalen des Patentanspruchs 1 und einer Vorrichtung mit den Merkmalen des Patentanspruchs 11 gelöst.
Vorteilhafte Weiterbildungen sind Gegenstand der Unteransprüche.

Dabei wird durch eine Leitung Wasserstoff zur Oberfläche geführt, verbrannt und die Wasserstoffflamme wird auf die Oberfläche gerichtet. Eine Diffusionsflamme ist als aktives Reduktionswerkzeug für Metalle und beliebige Oberflächen eine Quelle von Reduktionsspezies zur Reduktion und Modifizierung und Funktionalisierung von Metalloberflächen. Sie ist eine umweltfreundliche Alternative zur Flussmittel- und Säurebehandlung.

Erfindungsgemäß werden eine diffuse Wasserstoffflamme oder ein heißer Wasserstoffstrahl verwendet, um die mit bekannten Technologien verbundenen Probleme zu überwinden.

Die neue Technologie kann zum Löten verwendet werden, ohne dass Flussmittel, Plasma, Laseranregung, Sputtertechniken oder ein elektrisches Feld erforderlich sind. Die Methode nutzt den Kern einer diffusen Wasserstoffflamme, die im Kern noch reich an aktiven Wasserstoffarten ist. Die Temperaturen liegen dabei weit unterhalb von stöchiometrischen Wasserstoff-Sauerstoff-Flammen. Der nicht mit Sauerstoff verbrennende Wasserstoff kann dann Oberflächenoxide von den zu lötenden Oberflächen entfernen, indem der Wasserstoff mit dem Oxid der Oberfläche reagiert.

Dabei kann die Oberflächenenergie und die Energie einer Lötoberfläche erhöht werden, wodurch die Notwendigkeit einer Reinigung nach dem Löten auf effiziente Weise entfällt. Dies führt zu einer qualitativ hochwertigen und langfristig zuverlässigen Lötverbindung.

Der gesamte Prozess kann unter Umgebungsbedingungen oder unter sauerstoffarmen Bedingungen unter einem Edelgas wie Stickstoff durchgeführt werden und ist daher nicht nur für Batch-Verarbeitungsanwendungen sondern auch für Produktionslinien geeignet. Darüber hinaus werden ernsthafte Umweltprobleme durch Reinigungslösungen vermieden.

Besonders vorteilhaft ist es, wenn so viel Sauerstoff zugeführt wird, dass ein Teil des Wasserstoffs unterstöchiometrisch verbrennt.

Bei der Durchführung des Verfahrens in Umgebungsbedingungen von normaler Luft wird vorgeschlagen, dass als Anteil der gesamten zugegebenen Mischung weniger als 20 Vol. % und vorzugsweise weniger als 15 Vol. % und besonders bevorzugt sogar weniger als 10 Vol. % Sauerstoff zugegeben wird.

Wenn das Verfahren in einer sauerstofffreien Umgebung ausgeführt wird, können als Anteil der gesamten zugegebenen Mischung weniger als 45 Vol. % und vorzugsweise weniger als 35 Vol. % und besonders bevorzugt sogar weniger als 25 Vol. % Sauerstoff zugegeben werden.

Erfindungsgemäß wird der Wasserstoff exzentrisch oder unsymmetrisch zum Sauerstoff geführt.

Auch der Sauerstoff wird entsprechend der Erfindung als Alternative exzentrisch oder auch unsymmetrisch zum Wasserstoff geführt.

Vorteilhaft ist es, wenn die Oberfläche einen Durchlass aufweist und die Wasserstoffflamme auf den Durchlass gerichtet wird.

Eine Ausführungsvariante sieht vor, dass zwischen der Wasserstoffflamme und der Oberfläche ein Schutzschild angeordnet wird, das einen Durchlass aufweist, auf den die Wasserstoffflamme gerichtet wird.

Dabei ist es vorteilhaft, wenn zwischen Leitung und Durchlass eine poröse Führung angeordnet ist.

Um eine größere Fläche zu bearbeiten wird vorgeschlagen, dass mehrere Leitungen nebeneinander oder beieinander angeordnet sind und eine flächige Flamme auf die Oberfläche gerichtet wird.

Der Wasserstoff kann auch unter Hochspannungseinfluss verbrannt werden.

Darüber hinaus kann diese Technologie auch zur Reduktion von Metalloberflächen von Metallpulvern eingesetzt werden.

Ein System mit diffuser Flamme ist ein System, bei dem die Mischgeschwindigkeit im Verhältnis zur Reaktionsgeschwindigkeit des Brennstoffs und des Oxidationsmittels langsam ist, wobei die Mischung die Verbrennungsgeschwindigkeit steuert. Die meisten praktischen Verbrennungssysteme sind mischgeschwindigkeitsgesteuert und führen zu Diffusionsflammen, in denen Brennstoff und Oxidationsmittel durch molekulare und turbulente Diffusion in einer Reaktionszone zusammenkommen.

Im vorliegenden Fall ist das Brenngas Wasserstoff. Das charakteristische Merkmal der Diffusionsflamme liegt darin, dass die Brenngeschwindigkeit durch die Geschwindigkeit bestimmt wird, mit der Brennstoff und Oxidationsmittel im richtigen Verhältnis für die Reaktion zusammengebracht werden. Daher ist eine konzentrische Brennstoff-Oxidationsmittel-Konfiguration typisch für Diffusionsflammenprozesse. Gasförmige Diffusionsflammen haben keine grundlegende charakteristische Eigenschaft, wie z.B. die Flammengeschwindigkeit, die leicht gemessen werden kann. Selbst das anfängliche Mischungsverhältnis von Oxidationsmittel zu Brennstoff hat keine praktische Bedeutung.

Ein einfacher Wasserstoffstrahl, der durch einen Lichtbogen im Freien gezündet wird, ist selbst dann selbsttragend ist, wenn es keine parallele oder senkrechte Oxidationsmittelströmung gibt, da die umgebende Luft die Rolle des Oxidationsmittels spielt. Die umgebende Luft erzeugt eine entflammbare Zone (Entflammbarkeitsgrenzen: 4 - 95 % in $O_2$ und 5 - 75 % in Luft) an der Peripherie des Strahls, wodurch ein diffuser Wasserstoffstrahl entsteht. Die Spitzenflammentemperatur der diffusen Flammen liegt in ihren heißesten Zonen bei etwa 1000-1300 K (je nach Messung), was im Vergleich zur vorgemischten stöchiometrischen $H_2$-$O_2$-Flamme fast 2000 K niedriger ist. Die zentrale Zone ist mit nicht umgesetztem $H_2$ und einer hohen Konzentration an H-Atomen gefüllt, die aus der Reaktion von Zersetzung und OH-Bildung resultiert. Die Einzelheiten der thermischen und kompositorischen Berechnungen finden sich in (Linan 1995).

Das Ziel des Verfahrens liegt darin, die kältere zentrale Zone (abhängig von der Zusammensetzung, etwa 300 K kälter), die mit H-Atomen und nicht umgesetztem $H_2$ gefüllt ist, zur Behandlung von Materialien und Oberflächen zu nutzen. Dabei reicht in vielen Anwendungen eine Erwärmung der Oberfläche auf 200 bis 300 °C. In der Regel liegen die Oberflächentemperaturen unter 500 °C.

Ein PEM-Elektrolyseur kann verwendet werden, um vor Ort reinen und trockenen Wasserstoff zu erzeugen. Dieser Wasserstoff kann mit Edelgas oder nichtreaktivem Gas wie $N_2$, Ar, He... verdünnt werden, aber die Wasserstoff-Konzentration sollte oberhalb des brennbaren Bereichs bleiben.

Der Wasserstoff wird dann durch ein Rohr zu einem Brenner am Ausgang des Rohres geleitet, wobei optional ein Oxidationsmittel zugefügt werden kann, das zur Reaktion mit dem Wasserstoffstrahl verwendet werden kann.

Das Gas wird durch einen Lichtbogen gezündet, um eine Diffusionsflamme zu erzeugen.

Der Rohrausgang kann kreisförmig, geschlitzt oder in einer an die Form der Oberfläche angepassten Form ausgebildet sein. Es können auch mehrere Ausgänge verwendet werden, um die Bildung eines Vorhangs oder einer großflächigen Flammenzone zu ermöglichen. Das Oxidationsmittel muss den Wasserstoff nicht umschließen, jedoch sollte es zumindest einen Punkt geben, von dem aus die Mischung mit dem Oxidationsmittel möglich ist.

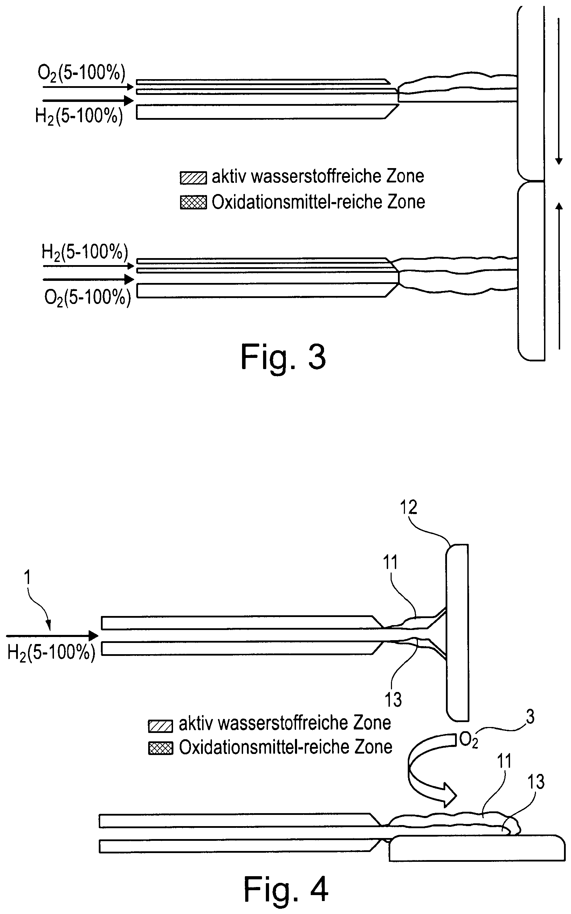

Ausführungsbeispiele sind in der Zeichnung dargestellt und werden im Folgenden näher beschrieben. Davon sind nur die in den Figuren 3, 12, 13 und 14 gezeigten Ausführungsbeispiele die Erfindung zeigende Ausführungsbeispiele . Es zeigt

| Figur 1 | schematisch eine Leitung mit innen Wasserstoff und eine Leitung mit innen Wasserstoff und außen Wasserstoff und jeweils einer Flamme, |
|---|---|
| Figur 2 | eine alternative Flammenkonfiguration mit sauerstoffreicher Zone innen und wasserstoffreicher Zone außen, |
| Figur 3 | eine nicht symmetrische Flamme senkrecht zur Oberfläche, |
| Figur 4 | schematisch die Wechselwirkung eines diffusen Flammenstrahls mit der Oberfläche bei senkrecht und parallel auftreffendem Strahl, |
| Figur 5 | schematisch die Behandlung eines Loches in der Oberfläche und die Interaktion des Strahls mit dem Loch, |
| Figur 6 | eine Verwendung einer porösen Führung und eines Schutzschildes, |
| Figur 7 | eine Anordnung mehrerer Düsen als Strahlarray, |
| Figur 8 | eine Anordnung einer Elektrode in der Leitung, |
| Figur 9 | eine Reduktion an der Oberfläche eines Lötmittels, |
| Figur 10 | eine Anordnung eines Lötmitteldrahtes in der Leitung, |
| Figur 11 | ein Standardwellen- und/oder Selektivwellenlötverfahren, |
| Figur 12 | ein alternatives Verfahren, bei dem die |

Flussmitteldüse durch eine Wasserstoffflamme ersetzt ist,

Figur 13     ein weiteres alternatives Verfahren zur Vorbehandlung von Lötstellen unmittelbar vor dem Löten und

Figur 14     ein Konstruktionsschema für die gleichzeitige Behandlung der Lötstelle und der Lötwelle zur Vereinfachung des Verfahrens.

Nur die Figuren mit einer nicht symmetrischen Sauerstoffzuführung sind erfindungsgemäße Ausführungsbeispiele.

Die beim Verbrennen von Wasserstoff 1 in Luft 2 entstehende Flamme 11 ist reich an Sauerstoff 3 und Wasserdampf 4 und den OH-Spezies 5 auf der Außenseite 6, während der zentrale Teil 7 hauptsächlich mit dem Wasserstoff 1 in atomarer und molekularer Form gefüllt ist. Die Wasserstoff-Spezies 5 sind äußerst reaktionsfreudig und können zur Reaktion und Reduzierung der Oberflächen führen, mit denen sie in Kontakt kommen.

In den Figuren zeigen die doppelt schraffierten Bereiche oxidationsmittelreiche Zonen und die einfach schraffierten Bereiche aktiv-wasserstoffreiche Zonen.

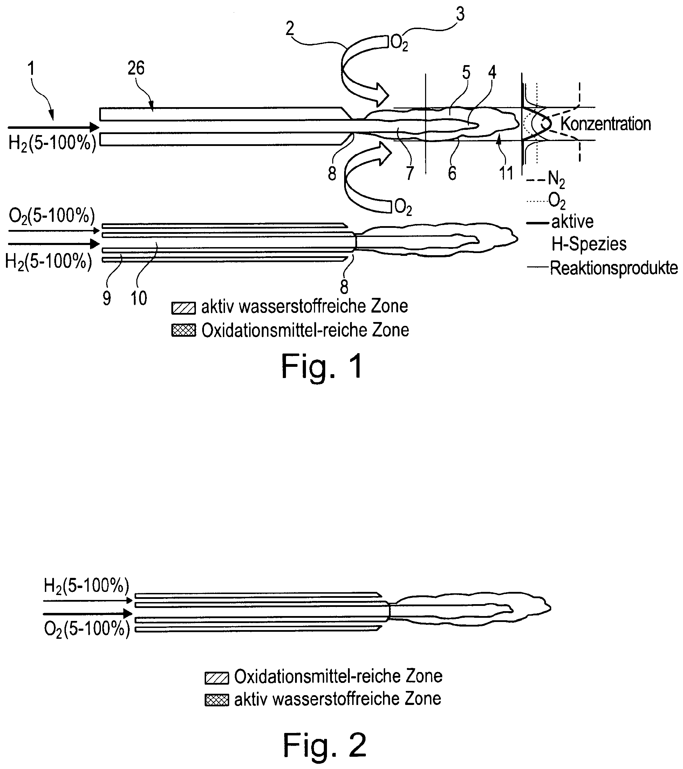

Die Figur 1 zeigt zwei Fackelkonfigurationen und ein schematisches Profil der Flammenzusammensetzung. Die obere Abbildung der Figur 1 zeigt eine Düse 8 ohne externe Oxidationsmittelströmung, wobei die Düse 8 das Oxidationsmittel (Sauerstoff) 3 aus der Umgebung aufnimmt. Die untere Abbildung zeigt einen extern kontrollierten Oxidationsmittelstrom 9, der koaxial zum Wasserstoffstrom 10 als Sauerstoffstrom zugegeben wird.

Die aktiven Wasserstoffspezies 5 können verwendet werden, um Materialien und Pulveroberflächen zu behandeln, zu modifizieren und zu reduzieren. Eine typische Anwendung ist die Vorbehandlung von Metallen vor dem Löten, um ihre Oberfläche zu reduzieren und somit das Flussmittel zu ersetzen.

Da das System selbstversorgend ist, wird keine externe Energiequelle benötigt, um es aufrechtzuerhalten, und es kann nur durch Gasflusssteuerungen gesteuert werden. Wenn jedoch eine Wasserstofferzeugungsquelle vor Ort aus Wasser verwendet wird, ist Elektrizität zur Erzeugung des Wasserstoffs erforderlich.

Bei der in der Figur 2 gezeigten alternativen Flammenkonfiguration liegt die sauerstoffreiche Zone innen und die wasserstoffreiche Zone liegt radial außen.

Die Figur 3 zeigt, dass der Strahl auch unsymmetrisch ausgebildet sein kann.

Wenn die diffuse Flamme 11 wie in Figur 4 gezeigt senkrecht oder parallel mit einer Oberfläche 12 in Kontakt kommt, sind die aktiven Wasserstoffspezies 13 mit der Oberfläche 12 in Kontakt, da der zentrale Teil der Flamme 11 reich an diesen Spezies ist. Wenn durch die Flammenparameter die Temperatur richtig eingestellt wird, können die aktiven Wasserstoffspezies 13 mit der Oberfläche 12 reagieren, um sie zu reduzieren.

Die typische Reaktion an der Oberfläche 12 kann vereinfacht wie folgt beschreiben werden:

$$MO_x + xH_2 \rightarrow M + xH_2O$$

$$MO_x + 2xH \rightarrow M + xH_2O$$

Die untere Abbildung in Figur 3 zeigt eine Flamme, für die nicht nur Wasserstoff sondern auch Sauerstoff zugeführt wird.

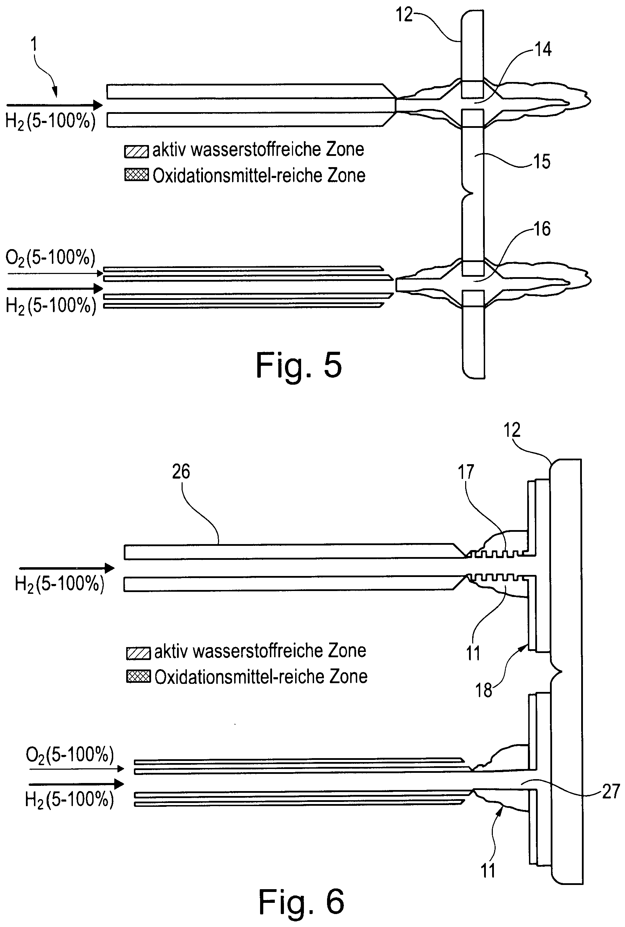

Besonders wirksam ist die Oberflächenbehandlung bei der Behandlung von Löchern 14, 16 in Oberflächen 15, da das reaktionsfreudige Gas wie in Figur 5 gezeigt in das Loch 14, 16 eindringt.

Weitere Modifikationen zur Verbesserung der Zusammensetzung des Strahls und der Spezies, die mit der Oberfläche 12 interagieren, können durch die Einführung einer porösen Membran oder eines porösen, vorzugsweise rohrförmigen Elementes 17 als Schnittstelle zwischen den Gasströmen vorgenommen werden.

Außerdem kann die Oberfläche 12 durch die Schaffung einer schützenden Oberfläche als Schutzschild 18 geschützt werden. Dadurch werden die Wasserstoffspezies gezwungen, auf der Oberfläche 12 zu verbleiben, die Retro-Diffusion von Sauerstoff wird reduziert und dadurch wird eine Nachoxidation weitgehend verhindert. Hierdurch kann die Mischung kontrolliert werden. Hierfür kann zwischen der Wasserstoffflamme 11 und der Oberfläche 12 der Schutzschild 18 angeordnet werden, das einen Durchlass 27 aufweist, auf den die Wasserstoffflamme 11 gerichtet wird.

Die Figur 6 zeigt mögliche Beispiele dieses Konzepts.

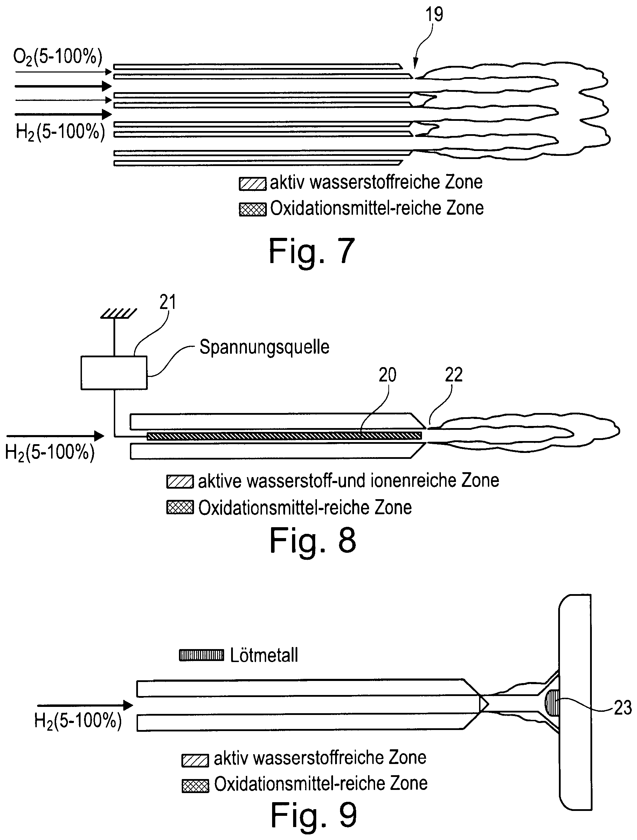

Zur Hochskalierung kann eine Vervielfachung der Düsen verwendet werden. Dies wird an einem einfachen Ausführungsbeispiel in Figur 7 gezeigt. Sie zeigt ein Beispiel für ein Jet-Array 19. Zur Behandlung größerer Flächen können auch mehrere Düsen vorhangartig eingesetzt werden.

Das Anlegen eines ionisierenden elektrischen Feldes an die Diffusionsflamme kann zu weiteren Leistungsverbesserungen führen, da es zur Bildung ionisierter Spezies führen kann, die besonders reaktiv sein können. Das Feld kann je nach Ionenbedarf Gleich- oder Wechselstrom sein. Die Figur 8 zeigt ein Beispiel für eine Konfiguration mit einer Elektrode 20, die durch eine Spannungsquelle 21gespeist wird, zur Ionisierung der aktiven Zone 22.

Ein besonders relevanter Anwendungsbereich liegt im Löten von Materialien. Gegenwärtig umfassen die meisten Lötprozesse drei grundlegende Schritte: erstens Vorreinigung und Reduktion von Oberflächenoxiden, zweitens Reflow-Löten und/oder Reflow-Fügen und drittens die Reinigung nach dem Löten. Der Vorreinigungsschritt wird jeweils mit verschiedenen Flussmitteln durchgeführt, um die Oberflächen für den Lötschritt vorzubereiten, indem Verunreinigungen und Metalloxide von der Lötoberfläche entfernt werden. Der Soldat-Verbindungsschritt kann erst erfolgen, nachdem die Oxidschicht entfernt wurde, da die hochschmelzenden Oxide die Benetzung der beiden zu verbindenden Oberflächen durch das Aufschmelzen des Lotes verhindern. Das Lot fließt beim Erwärmen in seine charakteristische Kugelform zurück und verbindet nur die mit dem Lot in Kontakt stehenden Oberflächen. Im dritten Schritt, der Reinigung nach dem Löten, werden alle Flussmittelrückstände aus dem ersten Schritt entfernt.

Ein Wellen- oder Selektivwellenlötprozess von Leiterplatten besteht im Wesentlichen aus den folgenden vier Schritten: 1. Fluxen, 2. Vorheizen zur Aktivierung des Flussmittels und zur thermischen Stabilisierung der Leiterplatten, 3. Löten auf einer flüssigen Lötwelle (vollständig oder selektiv), wobei die Lötwelle häufig mit $N_2$-Gas geschützt wird, 4. Waschen. Bei Anwendung des neuen Verfahrens ist Schritt 4 in allen Fällen nur optional. Der Schritt 1. kann mit einer der erfindungsgemäßen Düsen erfolgen, um die Leiterplatten vorzubehandeln und die Metalle zu reduzieren oder die zu lötende Oberfläche zu modifizieren, um sicherzustellen, dass die Oberfläche "lötbar" ist, wobei Schritt 2. je nach Bedarf optional ist.

Eine andere Möglichkeit ist das Vertauschen von Schritt 2. Vorwärmen und Schritt 1. Vorbehandlung als Schritt 1. und Schritt 2. entsprechend. Darüber hinaus kann die Technologie auch im Schritt 3. um die Lötwelle herum (selektiv oder vollständig) eingesetzt werden, um die Lötoberfläche und damit die Krätzebildung zu reduzieren, und zwar direkt unter Verwendung der hier beschriebenen Düsenkonzepte oder modifiziert durch Beimischung von Wasserstoff in die Stickstoffausläufe und unter Verwendung des Zünd- und Ionisationsprinzips.

Der Prozess kann sogar aus einem einzigen Schritt bestehen, bei dem die Behandlung der Lötstellenoberfläche und das Löten gleichzeitig erfolgen.

Das Verfahren kann potenziell für alle Leiterplattenoberflächen verwendet werden, wie z.B. Cu, Sn, HAL Sn, Im-Sn, ENIG, OSP usw., aber nicht darauf beschränkt.

Durch die Verwendung des erfindungsgemäßen Verfahrens bei der Vorreinigung wird auch keine Reinigung nach dem Löten mehr benötigt.

Das erfindungsgemäße Verfahren kann sowohl zur Reduzierung der zu lötenden Oberfläche als auch der Lötkolben oder eins Lötmittels 23 verwendet werden. Dies ermöglicht ein direktes flussmittelfreies Löten. Daher wird vorgeschlagen, dass mit der Wasserstoffflamme gelötet wird.

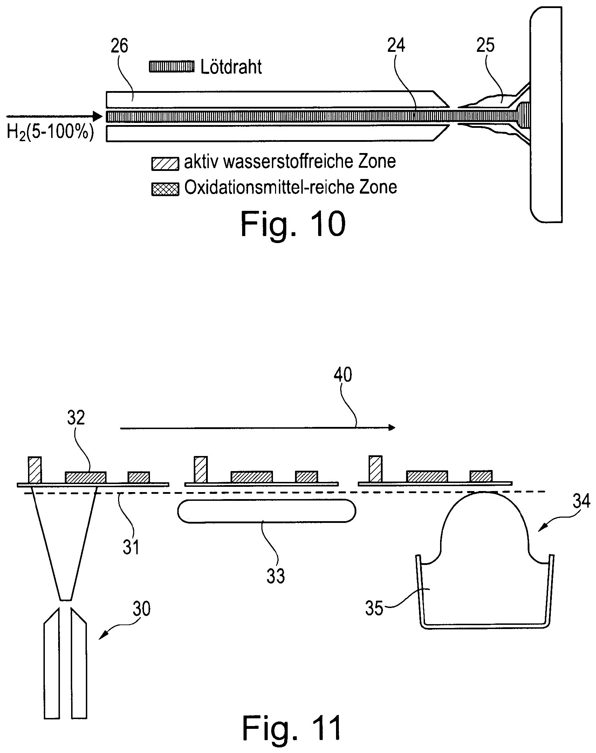

Bei Anwendungen mit niedrigem Takt kann die Quelle mit der Injektion eines Lotdrahtes 24 in die Diffusionsflamme 25 gekoppelt werden, wodurch die Wärme und die Wasserstoff-Spezies genutzt werden, um eine perfekte Lötverbindung zu gewährleisten. Der Lotdraht 24 kann, wie in Figur 10 gezeigt, separat oder gleichzeitig eingebracht werden. Die Figur 10 zeigt ein Beispiel für ein Hybridgerät, das die diffuse Flamme und die flussmittelfreie Lotdrahtbewegung in der Leitung 26 nutzt, in der auch der Wasserstoff 1 fließt, um ein gutes Lot zu erzeugen.

Das erfindungsgemäße Verfahren eignet sich auch sehr gut für die Vorbehandlung von Metalloberflächen. Verschiedene Metalloberflächen benötigen beispielsweise vor dem Bedrucken und Verkleben eine reduzierende Vorbehandlung, um die reaktive Metalloberfläche freizulegen, die dann zur entsprechenden Modifizierung verwendet werden kann.

Außerdem eignet sich das erfindungsgemäße Verfahren zur Pulver-Vorbehandlung. Metallpulver oxidieren oft aufgrund ihrer hohen spezifischen Oberfläche, was entweder dazu führt, dass sie für die Anwendung ungeeignet sind oder sie agglomerieren, wodurch sie für Anwendungen wie 3D-Druck oder Beschichtung völlig unbrauchbar werden. Das erfindungsgemäße Verfahren bietet hier eine Möglichkeit, die Oberfläche des Pulvers zu reduzieren und das Pulver zu recyceln und nutzbar zu machen.

In einem ersten Ausführungsbeispiel wird eine Wasserstoffflamme erzeugt, indem nur ein 2 Liter/min Wasserstoffstrahl gezündet wird, der in die Umgebungsluft austritt. Die Flamme stabilisiert sich in Sekunden. Dann wird diese Flamme senkrecht in Kontakt mit der stark oxidierten kupferblau gefärbten Oberfläche (geschätzte Dicke 40 - 60 nm) in einer Hin-und-her-Bewegung in Behandlungen (<< 2s statisch) gebracht. Die Farbe wird zu blankem Kupfer (< 10 nm), die momentane Temperatur bleibt niedriger als 200 °C, da die momentane Reoxidation, sobald die Flamme von der Oberfläche entfernt ist, nicht einmal in der Freiluftatmosphäre stattfindet, wenn die Wechselwirkungszeit weniger als 5 s beträgt. Dies ist außergewöhnlich, da es zur Reduktion des Kupfers führt, ohne dass die Oberfläche vom Sauerstoff der Umgebung isoliert werden muss. Der Prozess kann noch zuverlässiger gestaltet werden, wenn die Kupferoberfläche nicht direkt nach der Behandlung dem Sauerstoff ausgesetzt wird, z.B. indem sie unter Edelgasströmung gehalten wird.

In einem zweiten Ausführungsbeispiel wird eine 1-Liter/min-Wasserstoffflamme mit einer Strömungsrichtung parallel zur Oberfläche verwendet, wodurch die Flamme in Kontakt mit der wasserstoffspeziesreichen Oberfläche gebracht wird, indem die Materialoberfläche als Barriere für das Oxidationsmittel verwendet wird. Die Ergebnisse sind mit dem Beispiel 1 vergleichbar. Dies zeigt deutlich, dass die aktiven H-Spezies allgegenwärtig und sehr reaktiv sind und die Oxidschicht augenblicklich entfernen. Selbst unter Umgebungsbedingungen ist keine Reoxidation bemerkbar, insbesondere nicht nach dem ersten Durchgang. Mehrere Durchgänge können zu einem Temperaturanstieg führen, der eine leichte Reoxidation zur Folge haben kann, der aber leicht vermieden werden kann, wenn man Edelgas oder eine einfache Schutzfläche verwendet, die einen minimalen Kontakt mit dem Sauerstoff gewährleistet.

In einem anderen Ausführungsbeispiel wird eine oxidierte Kupferoberfläche für elektronische Anwendungen behandelt. Die Behandlung wurde unter Stickstoffbedingungen (Sauerstoff unter 1500 ppm) durchgeführt und die Proben wurden mechanisch unter einer Flamme mit 2,5 l/min $H_2$ und 0,5 l/min $O_2$ bei Geschwindigkeiten von bis zu 8 m/min vorbehandelt, um die Modifizierung zu gewährleisten, ohne dass die Oberfläche erneut der Sauerstoffumgebung ausgesetzt wird. Anschließend wurde diese Oberfläche unter Stickstoff in geschmolzenes Lot getaucht und die Lothaftung und die Kontaktwinkel waren mit denen der flussmittelbehandelten Oberflächen vergleichbar; auf der unbehandelten Oberfläche gab es keine Lothaftung. Bei der Vorbehandlung liefert ein unsymmetrischer Brenner positive Ergebnisse, wenn die Austrittsrichtung der Probe in Richtung der wasserstoffreichen Zone geht. Auch extrem oxidierte Kupferoberflächen zeigen mit dem neuen Verfahren bessere Ergebnisse als mit einem Standardflussmittel.

In einem ähnlichen Aufbau und einer Probenbewegung mit 4 1/min $H_2$ und 0,8 l/min $O_2$ wurden Zinnoberflächen (altes oxidiertes HAL-Sn und Im-Sn) behandelt. Die optimierte Behandlung unter $N_2$ hat gezeigt, dass die Zinnoberflächen "standardisiert" werden können und unabhängig vom Ausgangszustand eine lötbare Oberfläche mit Haftwerten erzeugt werden kann, die mindestens so gut ist wie die von Flussmittel-Referenzproben.

Eine Vorrichtung zum Reduzieren von Oberflächen weist in Strömungsrichtung eine Leitung zum Führen von Wasserstoff und ein Schutzschild mit einem Durchlass auf, wobei das Schutzschild senkrecht zur Leitung angeordnet ist und der Durchlass koaxial zur Strömungsrichtung angeordnet ist, sodass der Wasserstoff von der Leitung durch den Durchlass strömen kann

Vorteilhaft ist es dabei, wenn zwischen Leitung und Durchlass eine poröse Führung angeordnet ist, sodass der Wasserstoff durch die poröse Führung strömen kann.

Ein Ausführungsbeispiel sieht vor, dass in oder an der Leitung eine Elektrode für eine Hochspannung angeordnet ist.

Außerdem kann in oder an der Leitung ein Lötmaterial angeordnet sein.

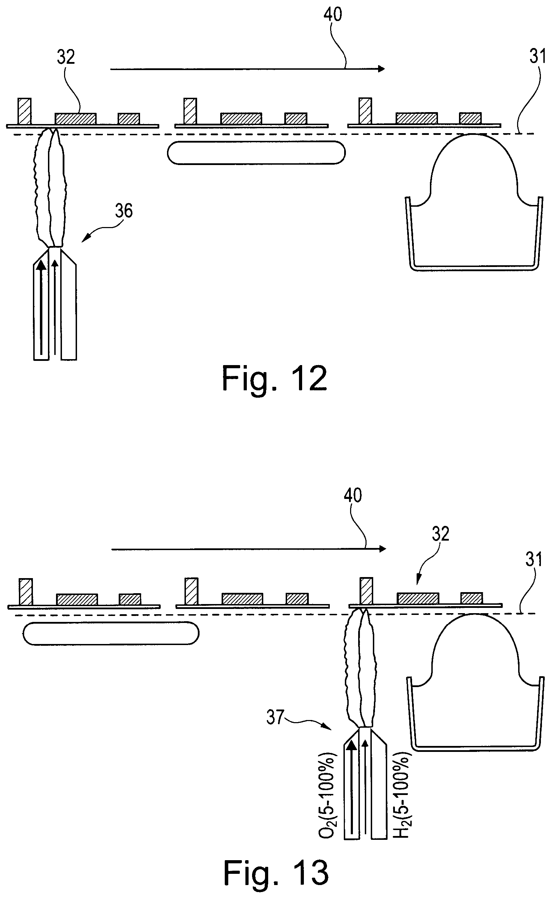

Die Figur 11 zeigt ein bekanntes Standardwellen- und Selektivwellenlötverfahren. Im Gegensatz dazu ist bei dem ein der Figur 12 gezeigten alternativen Verfahren die Flussmitteldüse durch eine Wasserstoffflamme ersetzt, die im Ausführungsbeispiel mit Sauerstoff unterstützt wird. Diese Sauerstoffunterstützung kann jedoch auch entfallen.

Bei der in der Figur 12 gezeigten Vorrichtung ist eine Flussmitteldüse 30 auf die Unterseite eines Förderbandes 31 gerichtet und auf dem Förderband liegen die zu behandelnden Teile 32 (nur selektiv mit Bezugszeichen versehen). Die derart vorbehandelten Teile gelangen zu einer Heizstation 33, an der die Teile 32 erwärmt werden. An der dritten Station 34, an die die Teile 32 mit dem Förderband 31 gefördert werden, wird ein Lötmittel 35 als Schmelzlotwelle oder als selektive Welle aufgebracht.

Die Figur 12 zeigt, dass die Flussmitteldüse 30 durch eine Wasserstoffflamme 36 ersetzt werden kann.

Die Figur 13 zeigt ein weiteres alternatives Verfahren zur Vorbehandlung von Lötstellen, bei dem die Teile 32 unmittelbar vor dem Löten mit einer Wasserstoffflamme 37 behandelt werden. Die Wasserstoffflamme kann - wie auch in den zuvor genannten Ausführungsbeispielen - 5 bis 100 % Wasserstoff und je nach Einsatzzweck zusätzlich 5 bis 100 % Sauerstoff aufweisen.

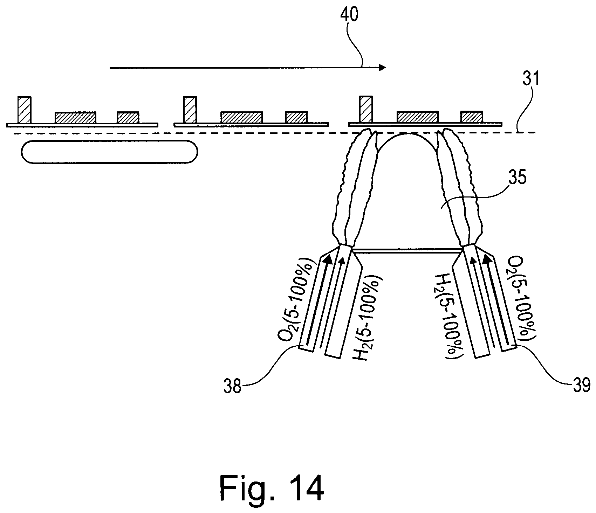

Das in der Figur 14 gezeigte Konstruktionsschema zeigt die gleichzeitige Behandlung der Lötstelle und der Lötwelle zur Vereinfachung des Verfahrens. Hierzu kann nur eine Wasserstoffflamme im Bereich des Lötmittels 35 eingesetzt werden. Vorteilhaft sind jedoch zwei Flammen 38, 39 an jeweils einer Seite des Lötmittels 35 in Flussrichtung 40 des Förderbandes 31 vor und hinter dem Lötmittel 35.

Die Heizstation 33 ist bei den in den Figuren 12 bis 14 gezeigten Vorrichtungen nur optional.

**Patentansprüche**

1. Verfahren zum Reduzieren von Oberflächen (12), wobei durch eine Leitung (26) Wasserstoff (1) zur Oberfläche (12) geführt, verbrannt wird und die Wasserstoffflamme (11) auf die Oberfläche (12) gerichtet wird, *dadurch gekennzeichnet, dass* auch Sauerstoff der Oberfläche (12) geführt wird, wobei der Sauerstoff durch eine Bohrung in einer Düse kontrolliert zugeführt wird, wobei die Düse eine zentrale Bohrung für den Wasserstoff und eine exzentrische Bohrung für den Sauerstoff oder eine zentrale Bohrung für den Sauerstoff und eine exzentrische Bohrung für den Wasserstoff aufweist, so dass der Wasserstoff exzentrisch oder unsymmetrisch zum Sauerstoff geführt wird und der Strahl unsymmetrisch ausgebildet ist, damit oxidationsmittelreiche Zonen und aktiv-wasserstoffreiche Zonen entstehen.

2. Verfahren nach einem der vorhergehenden Ansprüche, *dadurch gekennzeichnet, dass* so viel Sauerstoff (3) zugeführt wird, dass ein Teil des Wasserstoffs (1) unterstöchiometrisch verbrennt.

3. Verfahren nach einem der vorhergehenden Ansprüche, *dadurch gekennzeichnet, dass* als Anteil der gesamten zugegebenen Mischung weniger als 20 Vol. % und vorzugsweise weniger als 15 Vol. % und besonders bevorzugt sogar weniger als 10 Vol. % Sauerstoff (3) zugegeben wird.

4. Verfahren nach einem der Ansprüche 1 bis 2, *dadurch gekennzeichnet, dass* das Verfahren in einer sauerstofffreien Umgebung ausgeführt wird und als Anteil der gesamten zugegebenen Mischung weniger als 45 Vol. % und vorzugsweise weniger als 35 Vol. % und besonders bevorzugt sogar weniger als 25 Vol. % Sauerstoff zugegeben wird.

5. Verfahren nach einem der vorhergehenden Ansprüche, **dadurch gekennzeichnet, dass** die Oberfläche (12) ein Loch (14, 16) aufweist und die Wasserstoffflamme (11) auf das Loch (14, 16) gerichtet wird.

6. Verfahren nach einem der vorhergehenden Ansprüche, **dadurch gekennzeichnet, dass** zwischen der Wasserstoffflamme (11) und der Oberfläche (12) ein Schutzschild (18) angeordnet wird, das einen Durchlass (27) aufweist, auf den die Wasserstoffflamme (11) gerichtet wird.

7. Verfahren nach einem der Ansprüche 5 oder 6, **dadurch gekennzeichnet, dass** zwischen der Leitung (26) und der Oberfläche (12) eine poröse Führung (17) angeordnet ist.

8. Verfahren nach einem der vorhergehenden Ansprüche, **dadurch gekennzeichnet, dass** mehrere Leitungen nebeneinander oder beieinander angeordnet sind und eine flächige Flamme (11) auf die Oberfläche (12) gerichtet wird.

9. Verfahren nach einem der vorhergehenden Ansprüche, **dadurch gekennzeichnet, dass** der Wasserstoff (1) unter Hochspannungseinfluss verbrannt wird.

10. Verfahren nach einem der vorhergehenden Ansprüche, **dadurch gekennzeichnet, dass** die Oberfläche (12) zu behandelnder Teile (32) zuerst mit der Wasserstoffflamme (36) reduziert wird und dann mit Lötmittel (35) behandelt wird oder die Oberfläche (12) der zu behandelnden Teile (32) gleichzeitig mit der Wasserstoffflamme (36) reduziert und mit Lötmittel (35) behandelt wird.

11. Vorrichtung zum Reduzieren von Oberflächen (12), wobei sie eine Düse mit einer zentrale Bohrung für Wasserstoff und einer exzentrischen Bohrung für den Sauerstoff oder einer zentralen Bohrung für den Sauerstoff und eine exzentrische Bohrung für den Wasserstoff, so dass der Wasserstoff exzentrisch oder unsymmetrisch zum Sauerstoff geführt werden kann und der Strahl unsymmetrisch ausgebildet ist, damit oxidationsmittelreiche Zonen und aktiv-wasserstoffreiche Zonen entstehen.

12. Vorrichtung nach Anspruch 11, **dadurch gekennzeichnet, dass** sie in Strömungsrichtung eine Leitung (26) zum Führen von Wasserstoff (1) und ein Schutzschild (18) mit einem Durchlass (27) aufweist, wobei das Schutzschild (18) senkrecht zur Leitung (26) angeordnet ist und der Durchlass (27) koaxial zur Strömungsrichtung angeordnet ist, sodass der Wasserstoff (1) von der Leitung (26) durch den Durchlass (27) strömen kann.

13. Vorrichtung nach Anspruch 12, **dadurch gekennzeichnet, dass** zwischen Leitung (26) und Durchlass (27) eine poröse Führung (17) angeordnet ist, sodass der Wasserstoff (1) durch die poröse Führung (17) strömen kann.

14. Vorrichtung nach Anspruch 12 oder 13, **dadurch gekennzeichnet, dass** in oder an der Leitung (26) eine Elektrode (20) für eine Hochspannung angeordnet ist.

**Claims**

1. A method for reducing surfaces (12), wherein hydrogen (1) is conducted to the surface (12) through a line (26), burned, and the hydrogen flame (11) is directed at the surface (12), **characterized in that** oxygen is also conducted to the surface (12), wherein the oxygen is delivered in a controlled manner through a bore in a nozzle, wherein the nozzle has a central bore for the hydrogen and an excentric bore for the oxygen, or a central bore for the oxygen and an excentric bore for the hydrogen, so that the hydrogen is conducted excentrically or asymmetrically to the oxygen, and the jet is formed asymmetrically, so that zones rich in oxidizing agent and zones rich in active hydrogen result.

2. The method according to one of the preceding claims, **characterized in that** so much oxygen (3) is delivered that a portion of the hydrogen (1) burns substoichiometrically.

3. The method according to one of the preceding claims, **characterized in that** as a proportion of the entire added mixture, less than 20 vol.% and preferably less than 15 vol.% and particularly preferably even less than 10 vol.% oxygen (3) is added.

4. The method according to one of Claims 1 to 2, **characterized in that** the method is carried out in an oxygen-free environment, and as proportion of the entire added mixture, less than 45 vol.% and preferably less than 35 vol.% and particularly preferably even less than 25 vol.% oxygen is added.

5. The method according to one of the preceding claims, **characterized in that** the surface (12) has a hole (14, 16) and the hydrogen flame (11) is directed at the hole (14, 16).

**6.** The method according to one of the preceding claims, ***characterized in that*** between the hydrogen flame (11) and the surface (12) a protective shield (18) is arranged, which has a passage (27) at which the hydrogen flame (11) is directed.

**7.** The method according to one of Claims 5 or 6, ***characterized in that*** a porous duct (17) is arranged between the line (26) and the surface (12).

**8.** The method according to one of the preceding claims, ***characterized in that*** several lines are arranged adjacent to one another or next to one another, and a flat flame (11) is directed at the surface (12).

**9.** The method according to one of the preceding claims, ***characterized in that*** the hydrogen (1) is burned under high voltage influence.

**10.** The method according to one of the preceding claims, ***characterized in that*** the surface (12) of parts (32) which are to be treated is firstly reduced with the hydrogen flame (36), and is then treated with soldering agent (35), or the surface (12) of the parts (32) which are to be treated is reduced simultaneously with the hydrogen flame (36) and treated with soldering agent (35).

**11.** A device for reducing surfaces (12), wherein it has a nozzle with a central bore for hydrogen and an excentric bore for the oxygen or a central bore for the oxygen and an excentric bore for the hydrogen, so that the hydrogen can be conducted excentrically or asymmetrically to the oxygen, and the jet is formed asymmetrically, so that zones rich in oxidizing agents and zones rich in active hydrogen result.

**12.** The device according to Claim 11, ***characterized in that*** it has in the flow direction a line (26) for conducting hydrogen (1), and a protective shield (18) with a passage (27), wherein the protective shield (18) is arranged perpendicularly to the line (26), and the passage (27) is arranged coaxially to the flow direction, so that the hydrogen (1) can flow from the line (26) through the passage (27).

**13.** The device according to Claim 12, ***characterized in that*** a porous duct (17) is arranged between line (26) and passage (27), so that the hydrogen (1) can flow through the porous duct (17).

**14.** The device according to Claim 12 or 13, ***characterized in that*** in or at the line (26) an electrode (20) for a high voltage is arranged.

**Revendications**

**1.** Procédé, destiné à réduire des surfaces (12), lors duquel, à travers une conduite (26), l'on mène de l'hydrogène (1) vers la surface (12), on le fait brûler et l'on oriente la flamme d'hydrogène (11) sur la surface (12), ***caractérisé en ce que*** l'on mène également de l'oxygène vers la surface (12), l'oxygène étant amené à travers un perçage, de manière contrôlée dans une buse, la buse comportant un perçage central pour l'hydrogène et un perçage excentrique pour l'oxygène ou un perçage central pour l'oxygène et un perçage excentrique pour l'hydrogène, de sorte que l'hydrogène soit amené de manière excentrée ou asymétrique vers l'oxygène et que le jet soit conçu de forme asymétrique, de sorte à donner naissance à des zones riches en agents oxydants et à des zones riches en hydrogène actif.

**2.** Procédé selon l'une quelconque des revendications précédentes, ***caractérisé en ce que*** l'on amène une telle quantité d'oxygène (3) qu'une partie de l'hydrogène (1) se consume de manière sous-stœchiométrique.

**3.** Procédé selon l'une quelconque des revendications précédentes, ***caractérisé en ce qu'***en tant que fraction de l'ensemble du mélange ajouté, l'on ajoute moins de 20 % en volume et de préférence moins de 15 % en volume et de manière particulièrement préférentielle, même moins de 10 % en volume d'oxygène (3).

**4.** Procédé selon l'une quelconque des revendications 1 à 2, ***caractérisé en ce que*** l'on réalise le procédé dans un environnement exempt d'oxygène et **en ce que** l'on ajoute en tant que fraction de l'ensemble du mélange ajouté moins de 45 % en volume et de préférence moins de 35 % en volume et de manière particulièrement préférentielle, même moins de 25 % en volume d'oxygène.

**5.** Procédé selon l'une quelconque des revendications précédentes, ***caractérisé en ce que*** la surface (12) comporte un trou (14, 16) et l'on oriente la flamme d'hydrogène (11) sur le trou (14, 16).

**6.** Procédé selon l'une quelconque des revendications précédentes, ***caractérisé en ce qu'***entre la flamme d'hydrogène (11) et la surface (12), l'on place un écran protecteur (18), qui comporte un passage (27), sur lequel l'on oriente la flamme d'hydrogène (11).

**7.** Procédé selon l'une quelconque des revendications 5 ou 6, ***caractérisé en ce qu'***entre la conduite (26) et la surface (12) est placé un guidage (17) poreux.

**8.** Procédé selon l'une quelconque des revendications précédentes, *caractérisé en ce que* plusieurs conduites sont placées côte à côte ou près les unes des autres et l'on oriente une flamme (11) à plat sur la surface (12).

9. Procédé selon l'une quelconque des revendications précédentes, *caractérisé en ce que* l'on fait brûler l'hydrogène (1) sous l'influence d'une haute tension.

10. Procédé selon l'une quelconque des revendications précédentes, *caractérisé en ce que* l'on réduit la surface (12) des pièces (32) à traiter à l'aide de la flamme d'hydrogène (36) et on la traite ensuite avec des agents de brasage (35) ou **en ce que** l'on réduit la surface (12) des pièces (32) à traiter à l'aide de la flamme d'hydrogène (36) et on la traite simultanément avec des agents de brasage (35).

11. Dispositif, destiné à réduire des surfaces (12), celui-ci comportant une buse dotée d'un perçage central pour l'hydrogène et d'un perçage excentrique pour l'oxygène ou un perçage central pour l'oxygène et un perçage excentrique pour l'hydrogène, de sorte que l'hydrogène puisse être mené de manière excentrique ou asymétrique vers l'oxygène et que le jet soit conçu de forme asymétrique, de sorte à donner naissance à des zones riches en agents oxydants et à des zones riches en hydrogène actif.

12. Dispositif selon la revendication 11, *caractérisé en ce que* qu'il comporte dans la direction d'écoulement une conduite (26), destinée à mener de l'hydrogène (1) et un écran protecteur (18) doté d'un passage (27), l'écran protecteur (18) étant placé à la perpendiculaire de la conduite (26) et le passage (27) étant placé de manière coaxiale par *rapport* à la direction d'écoulement, de sorte que l'hydrogène (1) puisse s'écouler de la conduite (26) à travers le passage (27).

13. Dispositif selon la revendication 12, *caractérisé en ce qu*'entre la conduite (26) et la passage (27) est placé un guidage (17) poreux, de sorte que l'hydrogène (1) puisse s'écouler à travers le guidage (17) poreux.

14. Dispositif selon la revendication 12 ou 13, *caractérisé en ce que* dans ou sur la conduite (26) est placée une électrode (20) pour une haute tension.

Fig. 1

Fig. 2

O₂(5-100%)

H₂(5-100%)

⬚ aktiv wasserstoffreiche Zone
⬚ Oxidationsmittel-reiche Zone

H₂(5-100%)

O₂(5-100%)

## Fig. 3

12

11

1

H₂(5-100%)

13

⬚ aktiv wasserstoffreiche Zone
⬚ Oxidationsmittel-reiche Zone

O₂ 3

11

13

## Fig. 4

**Fig. 5**

**Fig. 6**

$O_2$(5-100%)

19

$H_2$(5-100%)

▨ aktiv wasserstoffreiche Zone
▧ Oxidationsmittel-reiche Zone

# Fig. 7

21

Spannungsquelle

20    22

$H_2$(5-100%)

▨ aktive wasserstoff-und ionenreiche Zone
▧ Oxidationsmittel-reiche Zone

# Fig. 8

▥ Lötmetall

$H_2$(5-100%)

23

▨ aktiv wasserstoffreiche Zone
▧ Oxidationsmittel-reiche Zone

# Fig. 9

26                                24           25

▥▥▥▥ Lötdraht

$H_2$(5-100%)

▨▨ aktiv wasserstoffreiche Zone
▨▨ Oxidationsmittel-reiche Zone

## Fig. 10

40

32

31

30

33

34

35

## Fig. 11

**Fig. 12**

**Fig. 13**

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4117341 A1